# EUROPÄISCHE PATENTANMELDUNG

(11) **EP 1 930 911 A2**
(43) Veröffentlichungstag der Anmeldung: **11.06.2008**
(21) Anmeldenummer: 06812902.2
(22) Anmeldetag: 17.08.2006
(51) Int. Cl.: G21C 3/50

(54) **AMORPHISIERTER KERNBRENNSTOFF**

(30) Priorität: 18.08.2005 RU 2005127192
(71) Anmelder: Maksimov, Lev Nikolaevich, Novosibirsk 630049 (RU)
(72) Erfinder: Maksimov, Lev Nikolaevich, Novosibirsk 630049 (RU)
(74) Vertreter: Jeck, Anton
(86) Internationale Anmeldenummer: PCT/RU2006/000435
(87) Internationale Veröffentlichungsnummer: WO 2007/055615

(57) **Zusammenfassung**

Der amorphe Kernbrennstoff gemäß der vorliegenden Erfindung wird in Form einer Aufschlämmung erzeugt, die ein Dispersionsmittel verwendet, beispielsweise in Form von schwerem Wasser, in dem feste Brennstoffmikroteilchen (mit einer Größe von <10µm) in Form einer Dispersionsphase verteilt (suspendiert) sind. Diese Brennstoffmikroteilchen bestehen aus Metallen, die beispielsweise auf Thorium basieren, das mit Uran-235 und/oder Plutonium 239 legiert ist, und die Brennstoffmikroteilchen weisen keine Oxid- oder Karbidverbindungen eines bekannten, keramischen Typs auf. Diese metallischen Brennstoffmikroteilchen sind ursprünglich technologisch mit einem amorphen und nicht kristallinen Aufbau versehen, der bekannten Metallglassorten eigen ist. Zu diesem Zweck wird eine Monofraktionszusammensetzung der Mikroteilchen verwendet. Zusätzlich zu den Brennstoffmikroteilchen werden in die Dispersionsphasenzusammensetzung zusätzliche Mikroteilchen aufgenommen, beispielsweise amorphe Beryllium- und/oder Kohlenstoffteilchen. Dieser amorphe Kernbrennstoff ist im Wesentlichen dafür vorgesehen, die Entwicklung der Thoriumenergetik im Sinne der künftigen, historisch unvermeidlichen Umstellung der weltweiten Kernenergetik auf die Verwendung von Thorium statt Uran zu fördern.

## Beschreibung

Die Erfindung betrifft den Bereich der Kernenergiewirtschaft und dabei vorwiegend die zukunftsorientierte Entwicklung der Thorium-Energetik im Zusammenhang mit der zukünftigen historisch unvermeidlichen Umstellung der Welt-Kernenergiewirtschaft auf Verwendung von Thorium anstatt Uran.

Der der Erfindung am nächsten kommende Stand der Technik (Prototyp) ist der bekannte Kernbrennstoff in Form von einer Suspension mit Einsatz von Schwerwasser als Dispersionsmittel. Im Schwerwasser werden als dispergierte Phase die festen Mikroteilchen (mit der Größe unter 10 µm) des Brennstoffs verteilt (schwebend). Diese Mikroteilchen des Brennstoffs enthalten die spaltbaren Isotopen von Uran.

In dem besagten Prototyp wurden die keramischen Mikroteilchen benutzt, welche aus oxidischen Verbindungen, insbesondere aus Uran- und Thorium-Dioxid, erzeugt wurden. Solcher Kernbrennstoff wurde zum ersten Mal vor über 50 Jahren vorgeschlagen. Ein spezieller Forschungsreaktor mit Kernbrennstoff in Form der genannten Suspension wurde im Zeitraum von 1975 bis 1977 erfolgreich eingesetzt (siehe «Status and prospect of thermal breeding. Preliminary report. IAEA CN-36/302/p.513»).

Im Endeffekt wurden experimentell einerseits einige sehr wichtige, aussichtsreiche Vorteile des suspensionsartigen Kernbrennstoffs bestätigt, andererseits jedoch wurden gleichzeitig mindestens zwei ausschlaggebende Nachteile des Prototyps entdeckt: Zum einen ist das die negative Auswirkung der abrasiven Eigenschaften von keramischen Brennstoff-Mikroteilchen im Rezirkulationskreislauf dieses Kernbrennstoffs, zum anderen die verhältnismäßig niedrige Dichte in Bezug auf die Kernkonzentration der schweren Kerne, wobei diese niedrige Dichte den keramischen Brennstoff-Mikroteilchen eigen ist. Auf dem Hintergrund der konkurrierenden Alternativrichtungen haben die entdeckten Nachteile dazu geführt, dass die weiteren Arbeiten im Zusammenhang mit der Verwendung von Kernbrennstoff in Form der genannten Wassersuspensionen eingestellt worden sind.

Das Wesen dieser Erfindung besteht in der Überwindung der oben genannten Nachteile des Prototyps. Dies wird durch die Umstellung der vorhergehenden Verwendung von keramischen Brennstoffen in der Suspension auf die Verwendung von entsprechenden Mikroteilchen erreicht. Die Mikroteilchen werden in diesem Fall aus Metallen, vorwiegend aus Legierungen auf der Basis von Metall-Thorium, mit einem Legierungszusatz für solche Legierungen von Uran-235 und (oder) Plutonium-239 hergestellt.

Die vorgeschlagene Umstellung auf die genannten metallartigen BrennstoffMikroteilchen schließen so gut wie vollständig die oben genannten negativen abrasiven Eigenschaften des Prototyps aus. Außerdem stellt diese Umstellung für eine solche Brennstoff-Suspension die maximal mögliche Konzentration der schweren Kerne in der Suspension sicher. Das gilt insbesondere für schwere Kerne der spaltbaren Stoffe. Dabei ist die maximal mögliche Konzentration gerade der nun verwendeten Metallform eigen.

Gleichzeitig gilt als ein besonders wichtiges Unterscheidungsmerkmal des vorgeschlagenen neuen Kernbrennstoffs, dass die oben genannten Metallmikroteilchen nicht mit ihrer üblichen Kristallgitterstruktur, sondern mit einer amorphen Struktur, welche dem bekannten Metallglas eigen ist, angewendet werden. Gerade diese amorphe Struktur der metallenen Mikroteilchen garantiert deren äußerst hohe chemische Beständigkeit, insbesondere im Schwerwasser, welches vorwiegend als Dispersionsmittel eingesetzt wird. Dies wurde experimentell durch zahlreiche bekannte Forschungen an Metallglas bestätigt, wobei das Metallglas eine höchst mannigfaltige Zusammensetzung hatte. Grundsätzlich wird diese Tatsache durch die physikalischchemische Natur des amorphen Zustandes als solches festgelegt_(siehe «Amorphe Metalle», K. Sudsuki u.a.m., Moskau, 1987).

Bei der zukunftsreichen verfahrenstechnischen Anwendung des vorgeschlagenen amorphisierten Brennstoffes wird seine weitere kennzeichnende Besonderheit wichtig, und zwar: In der dispergierten Phase der Suspension werden die Mikroteilchen mit einer Einkornzusammensetzung benutzt, d.h. mit der ungefähr gleichen Geometrie und den ungefähr gleichen typischen Abmessungen.

Außerdem werden in die Zusammensetzung der dispergierten Phase der Suspension unter Berücksichtigung der zukünftigen Entwicklung der erhöhten neutronenphysikalischen Kennwerte des vorgeschlagenen Brennstoffs zusätzliche Mikroteilchen eingeführt, zum Beispiel von amorphisiertem Beryllium und (oder) Kohlenstoff.

## Patentansprüche

1. Amorphisierter Kernbrennstoff als eine Suspension unter Benutzung von z.B. Schwerwasser als Dispersionsmittel, in dem als dispergierte Phase die festen Mikroteilchen (mit der Größe unter 10 µm) des Brennstoffs verteilt (schwebend) werden, welche die spaltbaren Isotopen von Uran und / oder Plutonium enthalten,
**dadurch gekennzeichnet,**
**dass** als solche feste Brennstoff-Mikroteilchen die Mikroteilchen verwendet werden, welche aus Metallen, zum Beispiel aus Legierungen auf der Basis von Metall-Thorium, mit einem Legierungszusatz für solche Legierungen von Uran-235 und / oder Plutonium-239 hergestellt werden und dass dabei die genannten Metallmikroteilchen ursprünglich und verfahrenstechnisch nicht mit ihrer üblichen Kristallgitterstruktur, sondern mit einer amorphen Struktur erzeugt werden, welche dem bekannten Metallglas eigen ist.

2. Kernbrennstoff nach Anspruch 1,
**dadurch gekennzeichnet,**
**dass** in der dispergierten Phase dieses amorphisierten Kernbrennstoffs die Mikroteilchen mit einer Einkornzusammensetzung benutzt werden.

3. Kernbrennstoff nach Anspruch 1 bzw. 2,
**dadurch gekennzeichnet,**
**dass** in die Zusammensetzung der dispergierten Phase der Brennstoff-Suspension die zusätzlichen Mikroteilchen, zum Beispiel von amorphisiertem Beryllium und (oder) Kohlenstoff, eingeführt werden.
